# EUROPEAN PATENT SPECIFICATION

(11) **EP 2 274 523 B1**
(45) Date of publication and mention of the grant of the patent: **26.10.2011**
(21) Application number: 09729557.0
(22) Date of filing: 07.04.2009
(51) Int. Cl.: F15D 1/02

(54) **FLUID FLOW MODIFICATION APPARATUS**
VORRICHTUNG ZUR ÄNDERUNG EINES FLÜSSIGKEITSFLUSSES
APPAREIL DE MODIFICATION DE L ÉCOULEMENT DE FLUIDE

(30) Priority: 10.04.2008 GB 0806504
(43) Date of publication of application: 19.01.2011
(73) Proprietor: Imperial Innovations Limited, London SW7 2AZ (GB)
(72) Inventor: VASSILICOS, John Christos, London SW7 4DA (GB); SEOUD, Richard Elian, London SW19 1QX (GB)
(74) Representative: Flutter, Paula
(86) International application number: PCT/EP2009/054156
(87) International publication number: WO 2009/124939

(56) References cited:
- WO-A-2007/113335
- KEARNEY M M: "ENGINEERED FRACTALS ENHANCE PROCESS APPLICATIONS" CHEMICAL ENGINEERING PROGRESS, AMERICAN INSTITUTE OF CHEMICAL ENGINEERS, NEW YORK, NY, US, vol. 96, no. 12, 1 December 2000 (2000-12-01), pages 61-68, XP000977893 ISSN: 0360-7275

## Description

### Field of the Invention

The present invention relates to apparatus for modifying the properties of a flow field. Embodiments of the invention can be used to control the mixing of fluids, heat, mass and momentum transfer within and between fluids, acoustic noise, oscillations in fluids, microchip cooling, structural vibrations and chemical reactions. Particular applications to which embodiments of the invention are particularly well suited include labyrinth seals, ventilation systems, combustors, chemical reactors and silent, as well as efficient brakes and airbrakes on air-, land- and seaborne vehicles and/or platforms.

### Background of the Invention

It is well-known that the mixing of fluids can be achieved by creating a turbulent fluid flow in a fluid flow field. One way of creating turbulent flow is to introduce a blockage into the fluid flow field. However, it is important to ensure that any blockage that causes turbulence, and therefore mixing, is not excessive. Ideally, the blockage ratio should not exceed 40%.

A well-known mixing apparatus that is considered to achieve satisfactory mixing at an acceptable blockage ratio is the SMV® gas (fluid) mixer that is manufactured by Sulzer Chemtech Limited of Winterthur, Switzerland. The SMV® mixer is often used in combination with Corrsin grids to improve the mixing achieved by those grids. However, the SMV® gas (fluid) mixer is a relatively complex and bulky piece of apparatus that requires careful installation in a fluid flow field prior to its use.

International patent application No. PCT/EP2007/053414, published under number WO2007/113335, describes various types of fluid flow modification apparatus in the form of fractal grids. These grids each represent an improvement over the Corrsin grid and have been found to exhibit a high degree of turbulence control in an economic and efficient manner.

It is an object of the present invention to improve mixing in the grids of the international patent application published under number W02007/113335.

### Summary of the Invention

In accordance with one aspect of the present invention, there is provided a fluid flow modification apparatus for creating turbulence in a fluid when said fluid is moving relative to the fluid flow modification apparatus in a fluid flow field, the apparatus comprising:
a plurality of turbulence-creating elements arranged in a fractal configuration, each turbulence-creating element having a first surface portion against which the fluid can flow and a second surface portion along which the fluid can flow;
an insert for arrangement in the apparatus so as to obstruct the flow of fluid between adjacent said second surface portions of at least two turbulence-creating elements; and
a support for holding the turbulence-creating elements in the fluid so as to allow movement of the fluid relative to the turbulence-creating elements and said insert.

Embodiments of the invention thus incorporate one or more inserts with turbulence-creating elements arranged in a fractal configuration; in this way, exemplary such fluid flow modification apparatus are significantly less bulky and complex than known alternative mixers, whilst providing similar, if not improved, levels of mixing to those achieved by known mixing devices.

In a preferred embodiment of the invention, the insert is attachable to each of at least two turbulence-creating elements, such that the arrangement of the inserts is symmetrical about a centre point of the fluid flow field. It has been observed that the symmetrical arrangement of the inserts significantly improves mixing achieved by the fluid flow modification apparatus.

The insert is preferably made of a substantially rigid material. In a further preferred embodiment of the invention, the insert is porous or perforated. The inclusion of pores or perforations in the insert provides a greater mixing effect.

Preferably, the turbulence-creating element to which the insert is attachable is the turbulence-creating element in closest proximity to a centre point of the fluid flow field. It has been observed that the placement of an insert close to the centre point of the fluid flow field has a significant impact on the mixing capability of the insert.

In an additional preferred embodiment of the invention, the insert is attachable to the first surface portion of the turbulence-creating element, such that at least one end of the first surface portion remains exposed. Leaving at least one end of the turbulence-creating element results in at least two corners of the turbulence-creating element free. Since corners are themselves useful in fluid mixing, it is preferable not to cover them with an insert that might have a detrimental effect on their mixing capability.

In a yet further preferred embodiment of the invention, the turbulence-creating elements are arranged in structures, each structure comprising a plurality of elongate members and the insert is attached to each of at least two elongate members in the structure, such that the arrangement of the inserts on the at least two elongate members is symmetrical about a centre point of the structure.

Further features and advantages of the invention will become apparent from the following description of preferred embodiments of the invention, given by way of example only, which is made with reference to the accompanying drawings.

### Brief Description of the Drawings

Figure la is a schematic diagram of a conduit in which fluid modification apparatus according to an embodiment of the invention can operate;

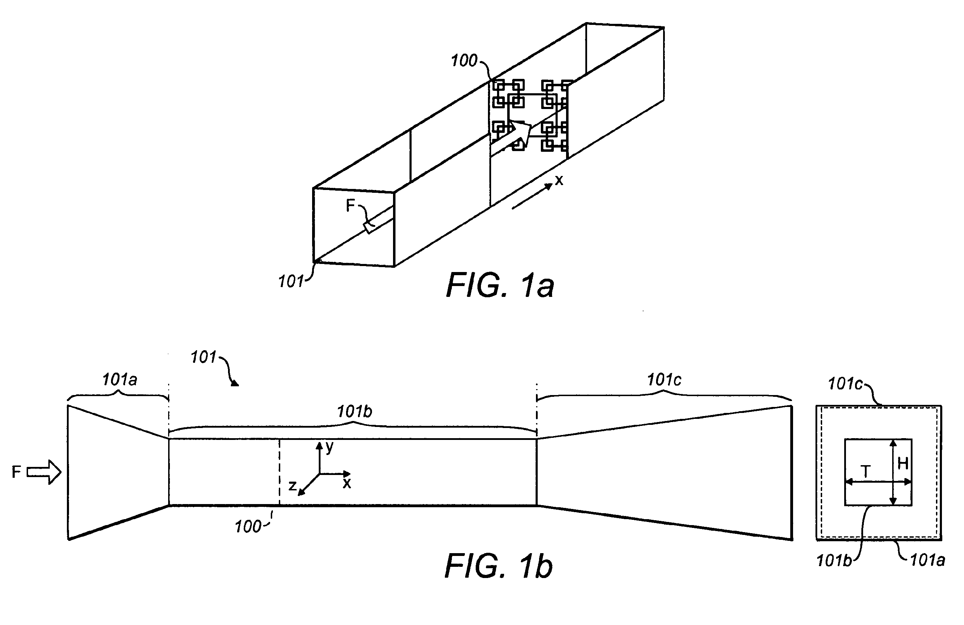

Figure 1b is a schematic diagram showing side and end views of a wind tunnel section arranged to accommodate fluid modification apparatus according to embodiments of the invention;
Figures 2a and 2b are schematic diagrams showing different embodiments of the prior art fluid modification apparatus;
Figures 3a and 3b are schematic diagrams showing further embodiments of the prior art fluid modification apparatus;
Figure 4 shows a schematic diagram of a fluid modification apparatus according to a first embodiment of the invention;
Figure 5 shows a schematic diagram of a fluid modification apparatus according to a second embodiment of the invention;
Figure 6 shows a schematic diagram of a fluid modification apparatus according to a third embodiment of the invention;
Figure 7 shows a schematic diagram of a fluid modification apparatus according to a fourth embodiment of the invention;
Figure 8 shows a schematic diagram of a fluid modification apparatus according to a fifth embodiment of the invention;
Figure 9 shows a schematic diagram of a fluid modification apparatus according to a sixth embodiment of the invention;
Figure 10 shows a schematic diagram of a fluid modification apparatus according to a seventh embodiment of the invention;
Figure 11 shows a schematic diagram of a fluid modification apparatus according to an eighth embodiment of the invention;
Figure 12 shows a schematic diagram of a fluid modification apparatus according to a ninth embodiment of the invention;
Figures 13a-13h show a graphical representation of near field measurement data taken in the axial direction along a centre line of the conduit shown in Figure 1b for fluid modification apparatus according to each of the eight embodiments of fluid modification apparatus shown in Figures 4-11, respectively;
Figures 14a-14h show a graphical representation of upstream measurement data taken in the axial direction along a centre line of the conduit shown in Figure 1b for fluid modification apparatus according to each of the eight embodiments of fluid modification apparatus shown in Figures 4-11, respectively;
Figure 15a shows a schematic diagram of a fluid modification apparatus of the invention being used as an airbrake and;
Figure 15b shows a schematic diagram of an arrangement comprising a plurality of the airbrakes shown in Figure 15a affixed to a portion of an aircraft wing.

In the figures, the same reference numerals are used to refer to the same parts and process steps; in relation to any given part, different embodiments thereof are assigned the same reference number as utilised in other embodiments, incremented by 100.

### Detailed Description of the Invention

As described above, embodiments of the invention are concerned with achieving improved mixing in a fluid flow field, the flow field being generated by relative movement between fluid and a body. In a first arrangement this relative movement is generated by fluid F flowing through a conduit such as conduit 101, shown part-open in Figure la. The conduit 101 can be any channel suitable for carrying fluid, of rectangular, circular or other suitable cross-section, and capable of accommodating fluid modification apparatus 100 therein.

In one arrangement the conduit 101 comprises a wind tunnel, which, as known in the art, typically comprises a contraction section 101a for directing the fluid into a test section 101b, within which fluid modification apparatus 100 is situated, and an exit section 101c, which acts to diffuse the fluid as it exits the conduit. The wind tunnel facilitates measurement of the effects of the fluid modification apparatus 100 on the flow field. The test section 101b of the wind tunnel comprises a rectangular cross section, of width T and height H, and the fluid modification apparatus 100 extends across the full cross section of the test section 101b.

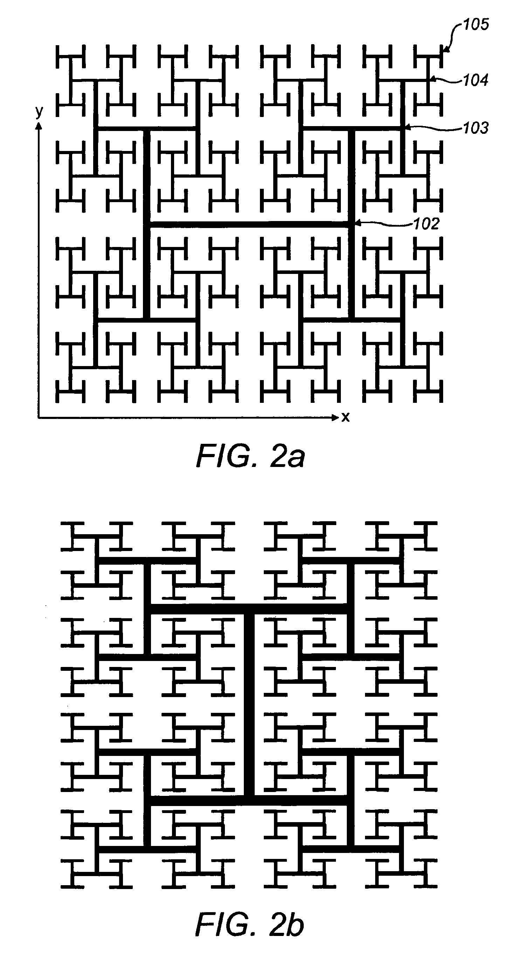

Turning now to Figure 2a, a first arrangement of a conventional fluid modification apparatus 100, hereinafter referred to as a grid, will be described. The grid 100 comprises a plurality of turbulence-creating or grid elements that are arranged symmetrically with respect to the 'x' axis of the test section 101b; each grid element has a first surface portion against which fluid can flow and a second surface along which fluid can flow. The grid elements are selected so as to generate turbulence within fluid flow therethrough and in this arrangement the grid elements are embodied as generally elongate members, substantially uniform along their length. The grid elements are arranged as four sets of structures 102, 103, 104, 105, which each include three elongate members. A first elongate member is attached to a second elongate member and a third elongate member at its respective ends, so that it is attached to the second and third elongate members part way along their respective lengths.

The respective elongate members are separably attached to one another, or are integral with one another and configured such that any given structure is part of one planar sheet. It will be noted that the individual members of a given structure abut those of another structure: the grid 100 is configured such that these abutting members engage with one another so as to prevent relative movement between individual structures while the fluid flows therethrough.

Whilst not shown in the drawings, the grid 100 also includes a support for engaging the grid 100 with a positioning mechanism within the wind tunnel 101b, the support being configured so as to enable relative movement between the grid 100 and fluid.

The number of structures making up a given set is constrained by a symmetry condition, which specifies that, with the exception of structures in the last set, each unconnected end of an elongate member in a given set is required to abut a structure in the next set. Accordingly, grid elements are arranged in a fractal configuration, since the grid 100 comprises a geometric pattern that is repeated at various scales and can be subdivided into parts, each of which is a smaller copy of the grid as a whole. The grid of Figure 2a has four sets of structures.

Figure 2b shows a grid 100 of an alternative configuration having four sets of structures.

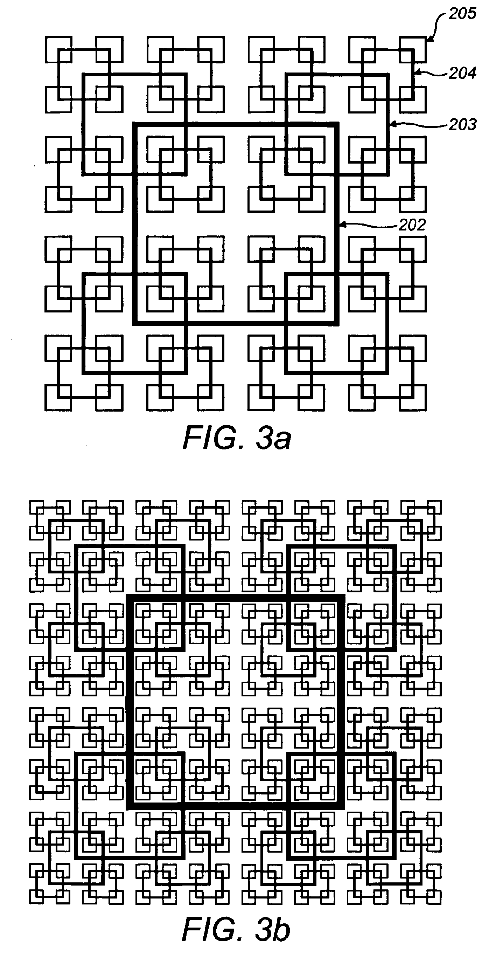

Turning now to Figures 3a and 3b, further alternative configurations of the conventional grid 200 will be described; in these configurations the grid elements comprise a plurality of structures, each in the form of a polygon. In the examples shown in Figures 3a and 3b, the polygon is embodied as a square, but it could alternatively be triangular, rectangular, hexagonal or any other structure comprising members joined in an end-to-end configuration. In the example shown in Figure 3a there are four sets of structures 202, 203, 204, 205 but in Figure 3b five sets of structures are shown. It will be appreciated from the foregoing that a grid can comprise various numbers of structures and indeed sets of structures, and should not be limited to the four or five sets of structures illustrated in the accompanying figures.

As for the grids shown in Figures 2a and 2b, grid elements according to the second configuration are arranged in a fractal configuration, since the grid comprises a geometric pattern that is repeated at various scales and can be subdivided into parts, each of which is a smaller copy of the grid as a whole.

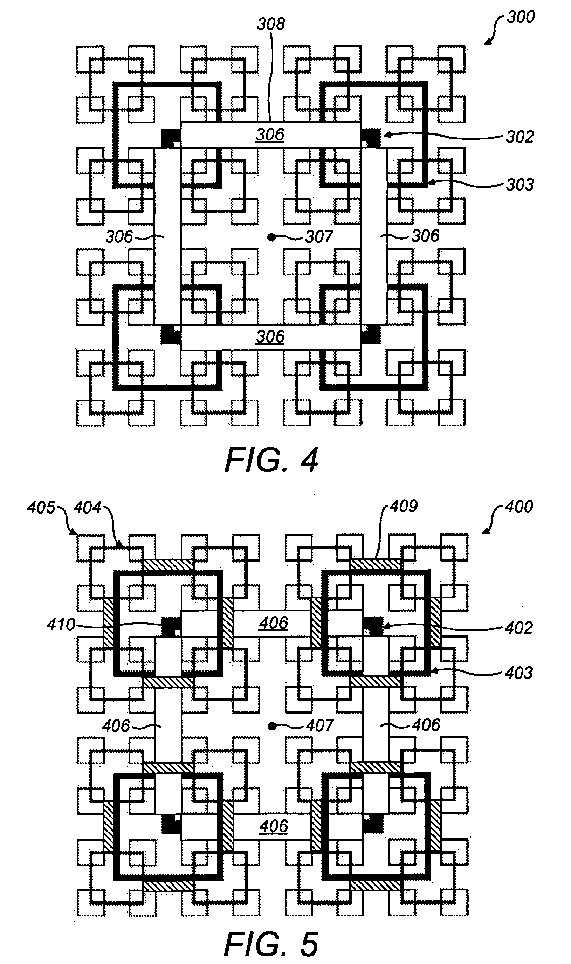

Figure 4 shows a grid 300 in accordance with a first embodiment of the invention. The grid 300 is of a configuration similar to the conventional grids 200 shown in Figures 3a and 3b. However, the grid 300 additionally has a generally rectangularly-shaped insert 306 attached to a first surface portion (against which fluid flows) of each elongate member of structure 302, which is the only structure that encompasses a centre point 307 of the fluid flow field within its boundary. The arrangement of the inserts 306 in the structure 302 is such that the inserts 306 are symmetrical about the centre point 307 of the fluid flow field, the centre point 307 coinciding with a centre point of the structure 302. As can be seen in Figure 4, the inserts 306 are of greater width than the elongate members of the structure 302, such that each insert 306 overlaps or protrudes beyond the edges of the respective elongate member that it covers. It will be noted that the inserts 306 obstruct the flow of fluid between elongate members of respective structures, or more precisely between second surfaces of the various elongate members. In addition, it is to be noted that the inserts 306 overlap parts of elongate members corresponding to two different sets of structures, 302 and 303. It is preferable to leave at least some of the corners on the structure 302 exposed because corners themselves generate vortices, and therefore provide good mixing.

The inserts 306 are made of a material that is substantially rigid, so that the inserts 306 can withstand the fluid flow against their respective fluid receiving surfaces 308. If the inserts 306 are unable to resist the fluid flow, they will start to oscillate, which is undesirable. Suitable materials for the inserts 306 will depend on the various applications of the invention but include plastic membranes, plexiglass and other acrylic or plastics-based materials, aluminium and other suitable metals. In one arrangement, the inserts 306 are attachable to the elongate members of the structure 302 using known attachment means, including adhesive and mechanical bonding. They are preferably releasably attached to the elongate members but can alternatively be positioned over the elongate members via a separate support or similar component.

Figure 5 shows a grid 400 in accordance with a second embodiment of the invention. The grid 400 includes the arrangement of inserts 406 described in the first embodiment of the invention but also includes a further set of inserts 409 that are arranged symmetrically around an outer periphery of each of a second set of structures 403 with respect to a centre point 410 of each second-level structure 403. The outer periphery is the periphery of each second-level structure 403 that is furthest from the centre point 410 of the structure (this corresponding to a corner of the first structure 402), the inner periphery being the periphery closest to the centre point 410. Although the inserts 409 are also substantially rectangular in shape, they are smaller than the inserts 406 because the surface area of the elongate members of the second set of structures 403 is smaller than that of the elongate members of the first structure 402. The inserts 409 are attached to a total of four second-level structures 403 and the arrangement of inserts 409 on each second-level structure 403 is symmetrical about the centre point 407 of the fluid flow field.

The inserts 409 are attached to the outer periphery of each second-level structure 403 and also each overlap an edge of a third 404 and fourth-level structure 405. In effect, the inserts 407 are arranged in a gap between an outer periphery of each second-level structure 403 and its respective third 404 and fourth-level structures 405. However, in contrast to the inserts 406 that overlap the structure 402 in the region of its outer periphery, the inserts 409 do not overlap both the inner and outer periphery of each second-level structure 403 (although such a configuration could be considered as an alternative).

As in the first embodiment of the invention and in all of the remaining embodiments discussed below, the inserts 409 are made of a substantially rigid material. The means of attachment of the inserts 409 to each structure 403 can be any one or a combination of those described in connection with the first embodiment of the invention. This also applies to the additional embodiments discussed below.

The inserts 409 could alternatively be arranged so that they overlap the structures 403 in a similar manner to the inserts 406 on the structure 402, i.e. so that the inserts 409 overlap the structures 403. Such overlap of the inserts 409 with the structures 403 may be necessary if the structural integrity of the inserts 409 is of such a low level that reinforcement of the inserts 409 is required, for example. In this case, the structures 403 would serve to reinforce the inserts 409.

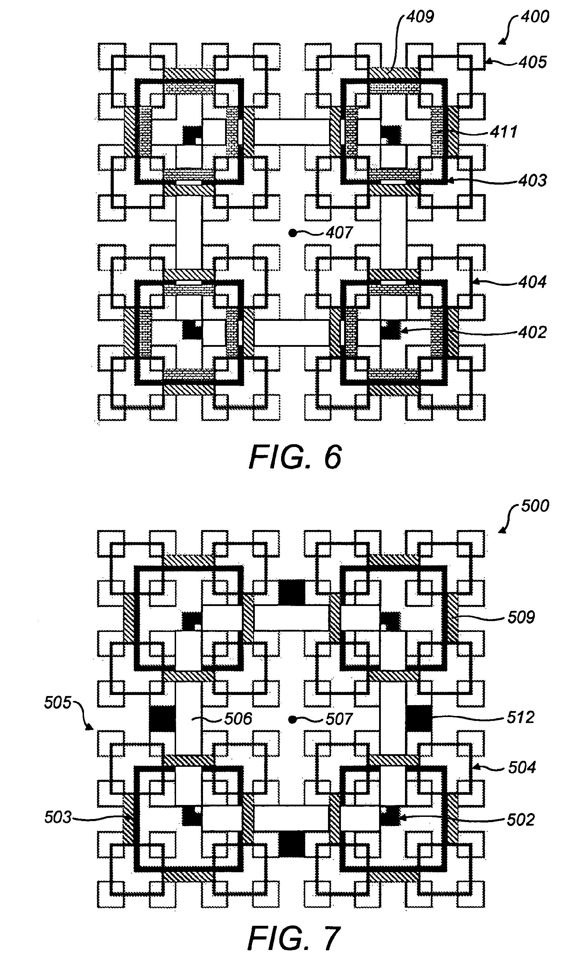

In Figure 6, the grid 400 has additional inserts 411 attached symmetrically around an inner periphery of each of the second set of structures 403, so that the inserts 411 are arranged symmetrically with respect to the centre point 410 of each second-level structure 403 and are located in a gap between the inner periphery of each second-level structure 403 and its respective third 404 and fourth-level structures 405. Each insert 409 and 411 is of substantially the same size and the inserts 409 and 411 on each second-level structure 403 are effectively mirror images of one another about each respective elongate member of that structure 403.

In the embodiment of the invention shown in Figure 7, the insert arrangement of the second embodiment of the invention is combined with four additional substantially square-shaped inserts 512 that are arranged along an outer periphery of the inserts 506. Each insert 512 is arranged approximately at the mid-point of the insert 506 and is located on the outer periphery thereof, such that it falls within a gap between adjacent fourth-level structures 505. The arrangement of the inserts 512 is symmetrical about the centre point 507 of the fluid flow field.

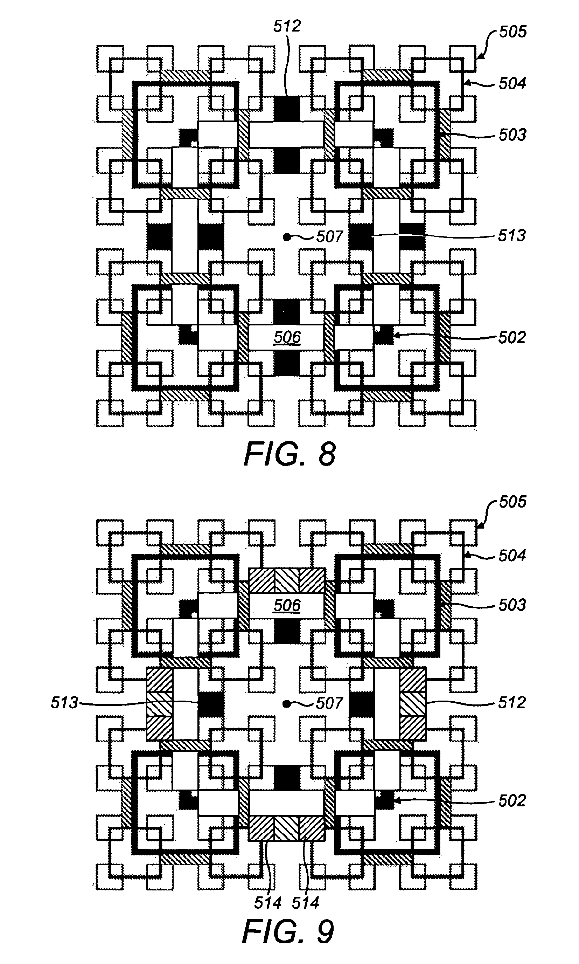

Figure 8 shows a further embodiment of the invention in which the insert arrangement of Figure 7 is supplemented with a further set of four substantially square-shaped inserts 513 that are arranged on the inner peripheries of inserts 506. Each insert 513 is arranged at the approximate mid-point of the insert 506 on which inner periphery it is located, such that it falls within a gap between adjacent fourth-level structures 505 and is symmetrical with the insert 512 about a centre line through the insert 506. The inserts 513 are also arranged symmetrically about a centre point 507 of the fluid flow field.

In Figure 9, the embodiment of Figure 8 has a further set of eight substantially square-shaped inserts 514, each of which is arranged adjacent to and on either side of each insert 512 so that the inserts 514 each overlap with the fourth-level structure 505. As in the previous embodiments described, the inserts 514 are arranged symmetrically about the centre point 507 of the fluid flow field.

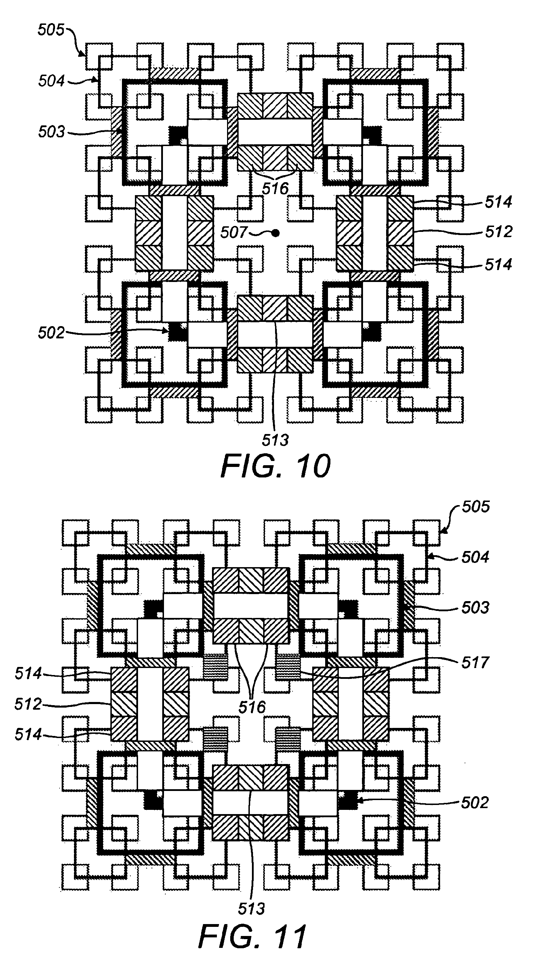

The embodiment of the invention shown in Figure 10 includes all of the inserts of Figure 9 in addition to a further eight substantially square-shaped inserts 516 that are arranged around the inner periphery of the insert 506. Each insert 516 is arranged on either side of an insert 513, so that the inserts 513, 516 along the inner periphery of each insert 506 effectively form a mirror image of the inserts 512, 514 that lie along the outer periphery of each insert 506. The inserts 516 are also symmetrical about the centre point 507.

In Figure 11, a further four substantially square-shaped inserts 517 are shown in the grid 500. Each insert 517 is positioned in the inner periphery of the third-level structure 504 that is closest to the centre point 507. Although the inserts 517 are arranged symmetrically about the centre point 507, there is no symmetry in their arrangement within the third-level structure 504. However, this arrangement achieves satisfactory fluid mixing without causing a flow reversal.

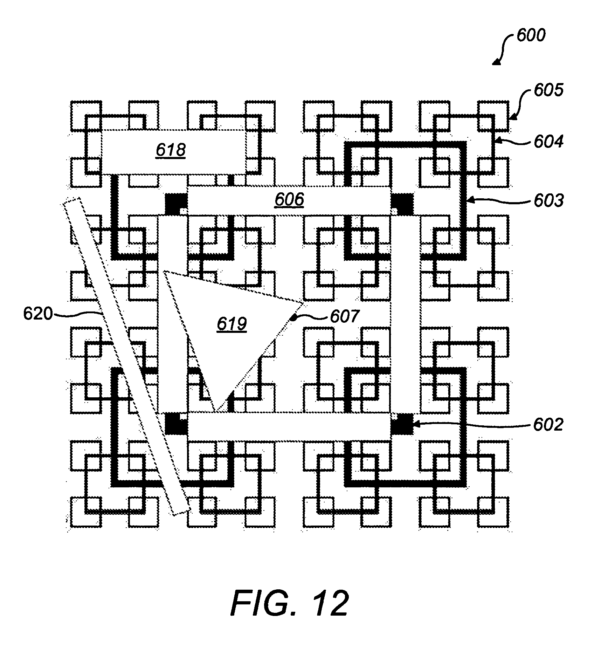

Figure 12 shows a further embodiment of the invention in which the grid 600 has a number of rectangular-shaped inserts 606 similar to those described in connection with Figure 4 above, and a further rectangular insert 618 that covers two adjacent third-level structures 604. The third-level structures 604 that are covered by the insert 618 are in the same horizontal plane and one of the structures 604 is located at a maximum distance from the centre point 607 of the fluid flow field. In addition, the embodiment of Figure 12 has a triangular-shaped insert 619 that overlaps a plurality of first, second, third and fourth-level structures 602, 603, 604 and 605. An elongated rectangular-shaped insert 620 is also arranged diagonally across the grid so that it overlaps a number of second, third and fourth-level structures 603, 604 and 605.

It will be appreciated that the size of each insert in constrained to some extent by the geometry of the structure(s) that the insert is covering. For example, if an insert is intended to overlap a structure, it should be sufficiently deep (in a vertical sense) to protrude beyond the inner and/or outer periphery of the structure in question so that it can effectively interfere with the fluid flow.

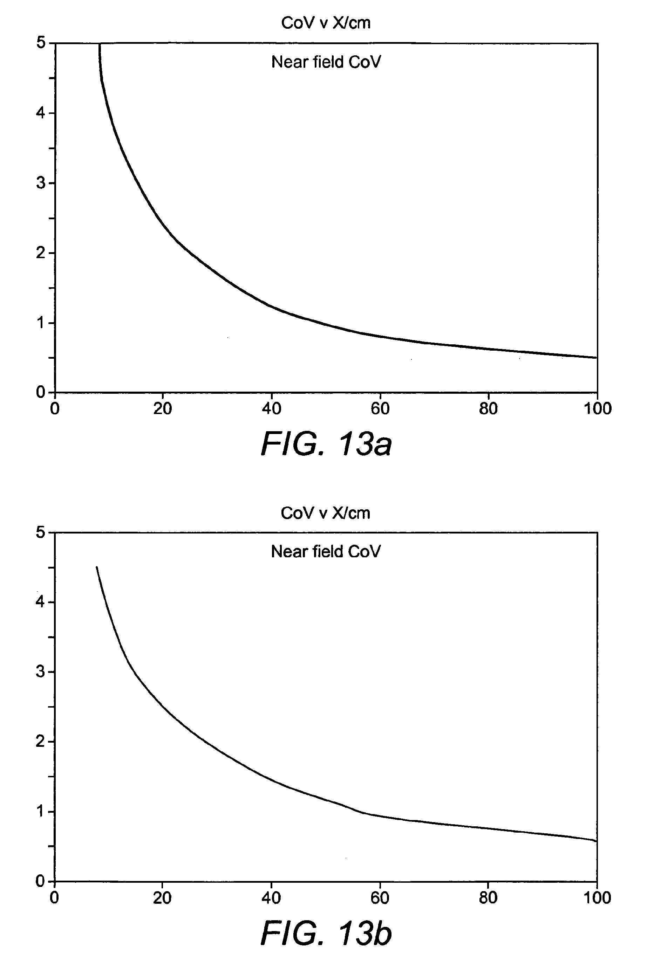

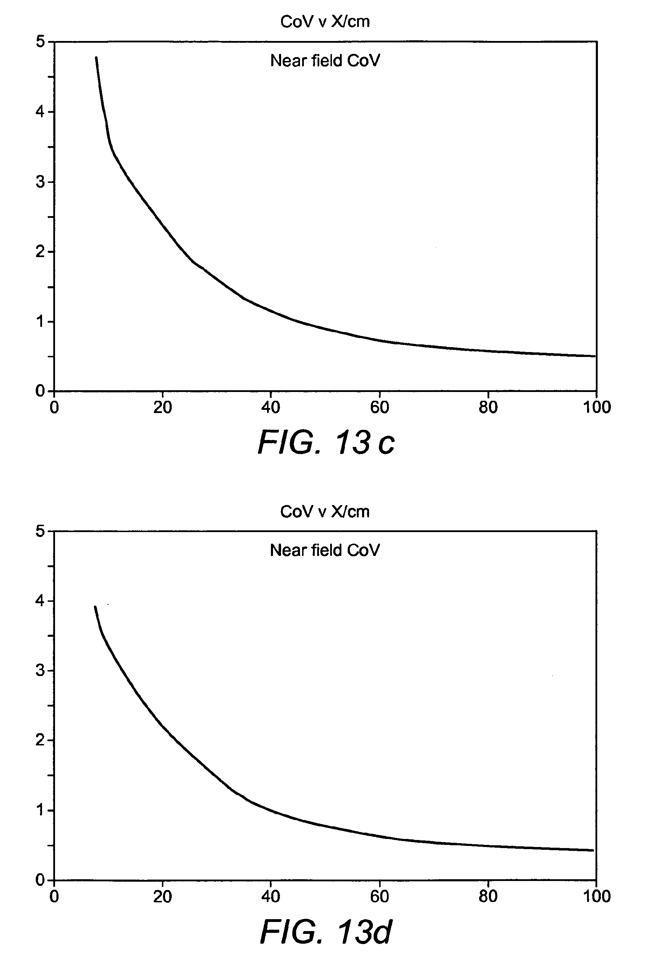

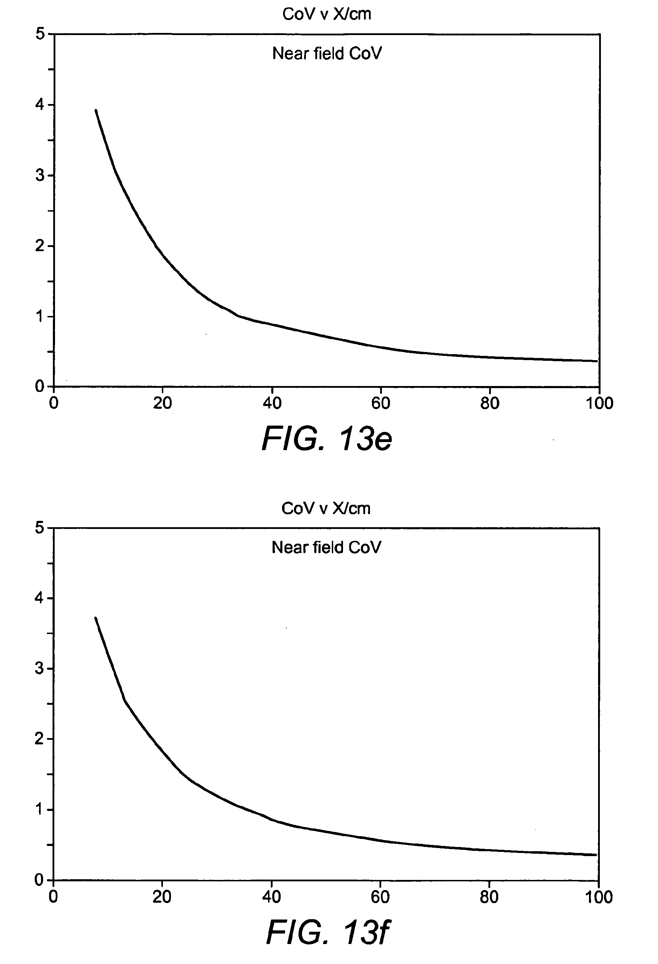

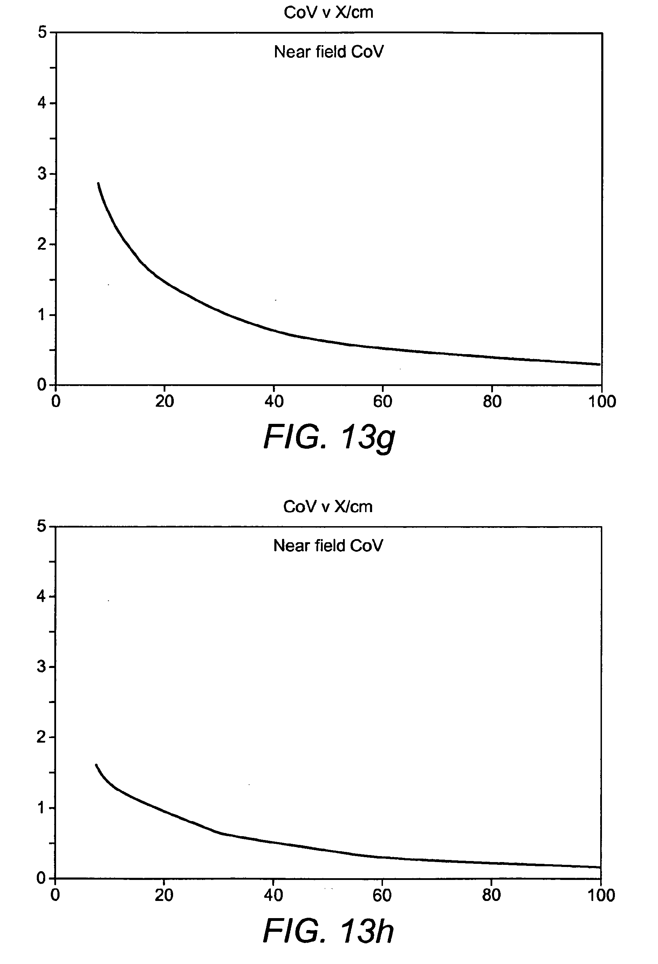

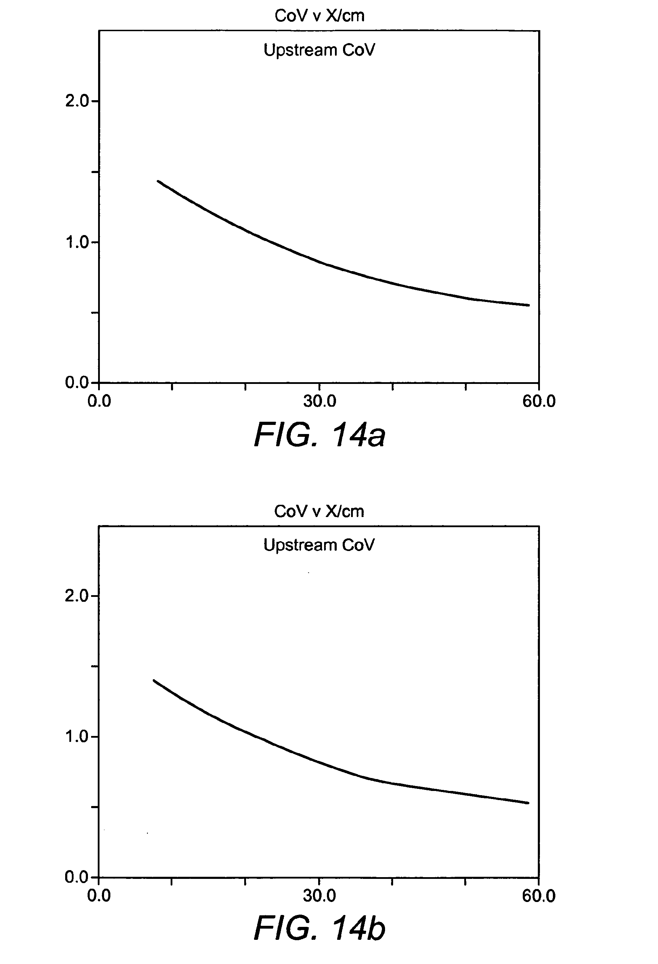

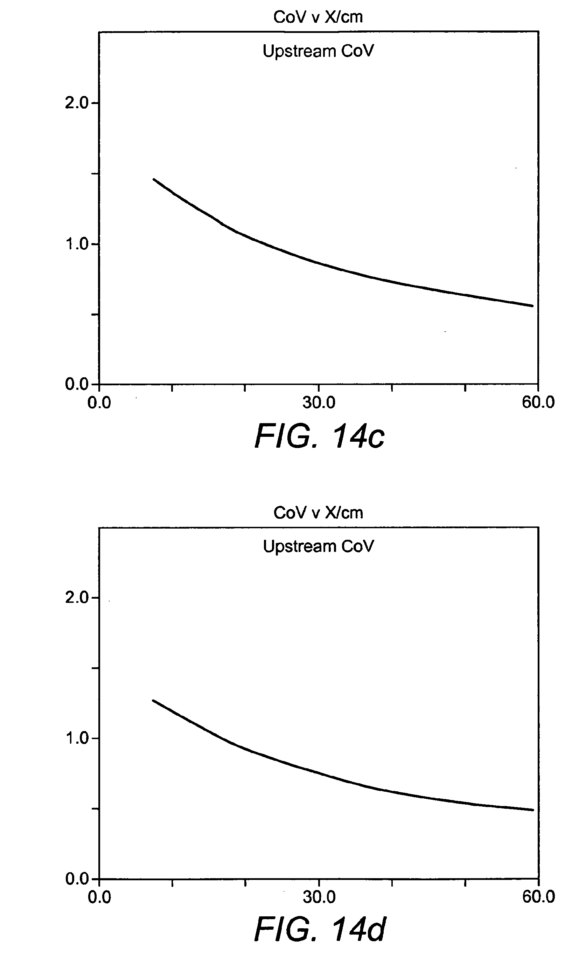

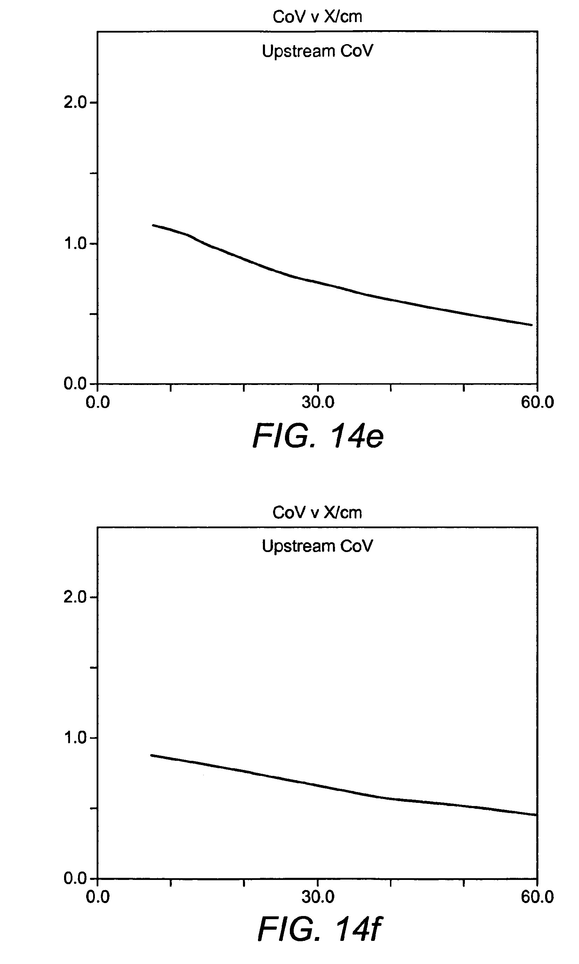

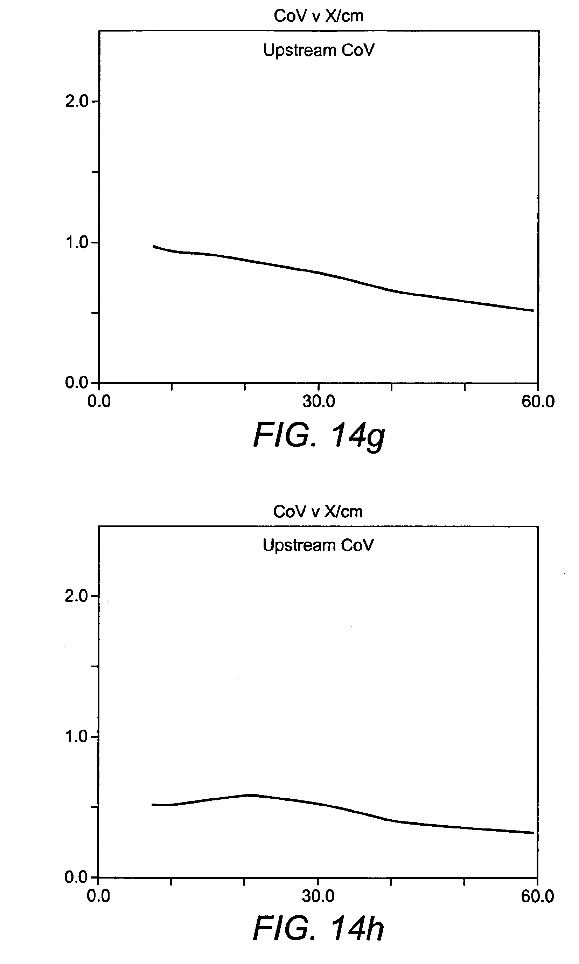

Graphs illustrating the effect on mixing of each of the embodiments described above are shown in Figures 13a-13h and 14a-14h. The graphs show the variation of the co-efficient of variance (CoV) with distance (in centimetres) from the grid upstream of the grid and in the downstream near field; as is well-known, a low co-efficient of variance indicates better mixing. Figures 13a and 14a depict graphs for the fluid flow apparatus shown in Figure 4, Figures 13b and 14b show those for the fluid flow apparatus shown in Figure 5, Figures 13c and 14c show those for the fluid flow apparatus shown in Figure 6, Figures 13d and 14d show those for the fluid flow apparatus shown in Figure 7, Figures 13e and 14e show those for the fluid flow apparatus shown in Figure 8, Figures 13f and 14f show those for the fluid flow apparatus shown in Figure 9, Figures 13g and 14g show those for the fluid flow apparatus shown in Figure 10 and Figures 13h and 14h show those for the fluid flow apparatus shown in Figure 11. A comparison of Figures 13a-13h with Figures 14a-14h reveals that a lower co-efficient of variance is noted downstream of the grid than upstream of the grid.. However, the co-efficient of variance both upstream and downstream of the grid represents an improvement over the co-efficient of variance obtained with prior art grids that do not have inserts. There is a degree of flow reversal close to and upstream of the grid. This flow reversal affects fluid flow upstream of the grid and improves mixing in that region. Material transport against the pressure gradient is also possible.

The above embodiments are to be understood as illustrative examples of the invention. Further embodiments of the invention are envisaged. For example, although the surfaces of the inserts described above, against which fluid is intended to flow, all have a substantially regular shape, it would also be possible for the inserts to have a fluid receiving surface of irregular shape. Similarly, the inserts could take the shape of other regular polygons, such as triangles (as shown in Figure 12). In addition, irregularly-shaped inserts could be used in combination with inserts in the form of regular polygons.

Furthermore, holes may be introduced in the inserts to improve mixing. Such holes could be in the form of pores or perforations in the inserts.

Specific materials have been suggested for the inserts in the description above but it will be appreciated that any material that enables the inserts to resist oscillation as a result of the fluid flow would be suitable.

It will be appreciated that the insert configurations described above have all demonstrated satisfactory mixing results but these are not the only acceptable insert configurations. Any arrangement of inserts that achieves a high degree of mixing but maintains a blockage ratio in the region of 10-40% would be acceptable. The arrangement of inserts is not limited to configurations that are symmetrical about the centre of the fluid flow field or about the centre of a particular structure (as demonstrated by the arrangement shown in Figure 12).

In some of the embodiments described above the inserts are used to substantially cover the turbulence-creating or elongate members in the grid. However, in other embodiments there is barely any overlap of the inserts with the turbulence-creating members and the inserts are largely arranged in gaps between those members. Neither of these arrangements is particularly preferred and certain configurations will prove more satisfactory than others in different applications of the invention.

The inserts can be homogenous or non-homogenous in nature. Similarly, a mixture of homogenous and non-homogenous inserts can be used.

In addition to the grid configurations discussed above, the grid could have a configuration in which the structures include a structure with two elongate members, in which one elongate member is attached to the other elongate member part way along the respective lengths of the elongate members so as to form a cross-shaped structure.

It has been noted by the inventors that satisfactory mixing can be realised in a simple manner with grids according to embodiments of the invention, without increasing the blockage ratio to an unacceptable level. Although this observation was made in relation to water, it should apply equally to other fluids, provided that the flow is a single-phase flow.

Although the embodiments of the fluid flow modification apparatus described above have inserts arranged therein, it will be appreciated that a fluid flow apparatus could be supplied with a set of inserts for a user to insert in the fluid flow modification apparatus in accordance with their own preferences. Similarly, the turbulence-creating elements could be supplied separately for insertion in the fluid flow modification apparatus by the user.

In view of the fact that fluid modification apparatus according to embodiments of the invention have a beneficial effect on mixing in fluid flow fields, embodiments of the invention can be used in applications such as air braking (e.g. for aeroplanes); aerodynamic control of fluid flow around motor vehicles and motorbikes; control of wind characteristics in sailing applications; among many others: in such applications it will be appreciated that the relative movement is induced by physical movement of the grid relative to the surrounding fluid, in which case the support structure would be affixed, e.g. to the wing of the aeroplane. Alternatively, relative movement could be provided by movement on the part of both the grid and the fluid.

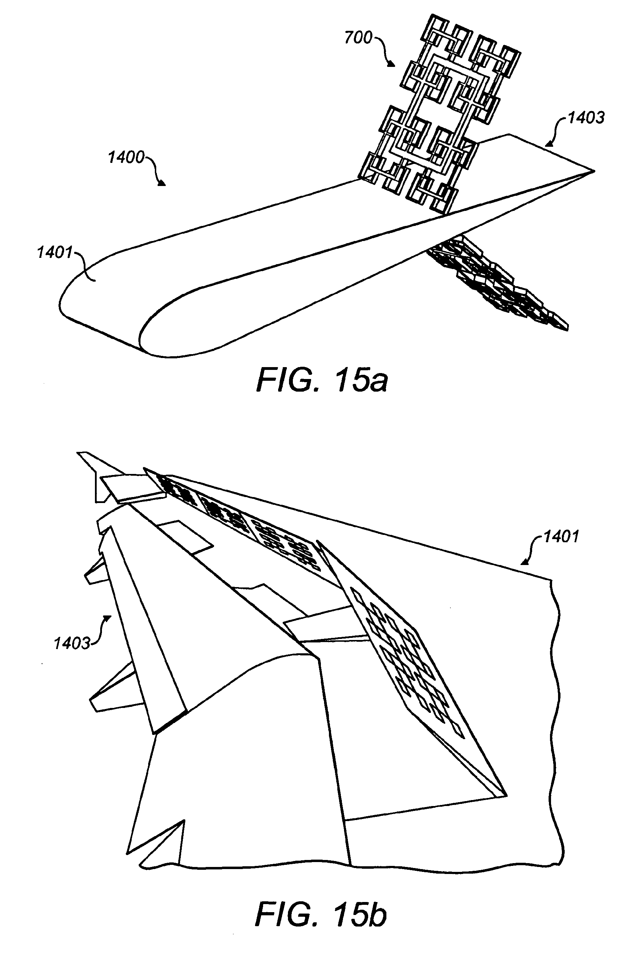

Figure 15a shows an airbrake comprising a grid 700 according to an embodiment of the invention (although the inserts on the grid 700 have been omitted from the drawing to improve clarity), the airbrake being hingedly connected to an aircraft wing 1400 between the leading edge 1401 and the trailing edge 1403 thereof. The fixing arrangement for connecting the fractal airbrake 700 to the wing 1400 preferably includes a lowering and raising mechanism, the operation of which can be dependent on air speed and controlled by an actuation system (such a configuration being employed in conventional leading edge wing slats mechanisms). One example arrangement is illustrated in Figure 15b, which shows a plurality of slats having been deployed, each slat comprising fractal airbrakes 700. As a general design principle, the type of fractal grid and its adaptation can be determined as functions of a number of various fractal, aerodynamic and structural parameters. Indeed, whilst the example shown in Figure 15b shows a similar geometrical configuration between respective fractal airbrakes, each or some of the individual fractal airbrakes could alternatively have different configurations, either in terms of structures making up a given airbrake and/or fractal dimension D_{f} and/or thickness ratio tᵣ.

Furthermore the fluid modification apparatus can be used to reduce structural vibrations that would otherwise be induced by aerodynamic loading.

In addition, fluid modification apparatus according to embodiments of the invention could be used in labyrinth seals and ventilation systems and in the mixing of chemicals in chemical reactors, where turbulence can be created without intermittency, therefore, providing better mixing. High turbulence intensities can also be achieved with relatively low pressure drops. The embodiments of fluid modification apparatus described above could also be used in combustion chambers. As with chemical reactors, turbulence could be created without intermittency and the likelihood of extinction could be reduced. The range of flow velocities at which burning can occur without quenching could also be increased and there is significant potential for reducing nitrogen oxide emissions.

Other applications of embodiments of the invention include heat, mass and momentum transfer and/or flow oscillations, specifically as a means to control acoustic noise and/or heat transfer to walls of a channel (since the invention improves the mixing within the channel, and thereby flattens the heat transfer profile across a given channel cross section).

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Fluid flow modification apparatus (100) for creating turbulence in a fluid when said fluid is moving relative to the fluid flow modification apparatus (100) in a fluid flow field, the apparatus comprising:
a plurality of turbulence-creating elements arranged in a fractal configuration, each turbulence-creating element having a first surface portion against when the fluid can flow and a second surface portion along which the fluid can flow;
an insert (306; 406; 409; 411; 512; 513; 514; 516; 517; 606; 618; 619; 620) for arrangement in the apparatus (100) so as to obstruct the flow of fluid between adjacent said second surface portions of at least two turbulence-creating elements; and
a support for holding the turbulence-creating elements in the fluid so as to allow movement of the fluid relative to the turbulence-creating elements and said insert (306; 406; 409; 411; 512; 513; 514; 516; 517; 606; 618; 619; 620).

2. Fluid flow modification apparatus (100) according to claim 1, wherein the insert (306; 406; 409; 411; 512; 513; 514; 516; 517; 606; 618; 619; 620) is attachable to each of at least two turbulence-creating elements, such that the arrangement of the inserts is symmetrical about a centre point of the fluid flow field.

3. Fluid flow modification apparatus (100) according to claim 1 or 2, wherein the insert (306; 406; 409; 411; 512; 513; 514; 516; 517; 606; 618; 619; 620) is made of a substantially rigid material, such that the insert (306; 406; 409; 411; 512; 513; 514; 516; 517; 606; 618; 619; 620) is capable of substantially withstanding the fluid flow against it.

4. Fluid flow modification apparatus (100) according to claim 1, 2 or 3, wherein the insert (306; 406; 409; 411; 512; 513; 514; 516; 517; 606; 618; 619; 620) is made of plastics or metal.

5. Fluid flow modification apparatus (100) according to any of the preceding claims, wherein the insert (306; 406; 409; 411; 512; 513; 514; 516; 517; 606; 618; 619; 620) has a fluid receiving surface against which fluid can flow and the fluid receiving surface has an irregular shape.

6. Fluid flow modification apparatus (100) according to any of claims 1 to 4, wherein the insert (306; 406; 409; 411; 512; 513; 514; 516; 517; 606; 618; 619; 620) has a fluid receiving surface against which fluid can flow and the fluid receiving surface is in the shape of a regular polygon.

7. Fluid flow modification apparatus (100) according to any one of the preceding claims, wherein the insert (306; 406; 409; 411; 512; 513; 514; 516; 517; 606; 618; 619; 620) is porous or perforated.

8. Fluid flow modification apparatus (100) according to any one of the preceding claims, wherein the insert (306; 406; 409; 411; 512; 513; 514; 516; 517; 606; 618; 619; 620) is non-homogenous.

9. Fluid flow modification apparatus (100) according to any one of the preceding claims, wherein the insert (306; 406; 409; 411; 512; 513; 514; 516; 517; 606; 618; 619; 620) is attachable to the first surface portion of a turbulence-creating element, so that the insert (306; 406; 409; 411; 512; 513; 514; 516; 517; 606; 618; 619; 620) at least partially covers the first surface portion of the turbulence-creating element.

10. Fluid flow modification apparatus (100) according to claim 9, wherein the insert (306; 406; 409; 411; 512; 513; 514; 516; 517; 606; 618; 619; 620) is arranged to protrude beyond an edge of the first surface portion of the turbulence-creating element.

11. Fluid flow modification apparatus (100) according to claim 9 or 10, wherein the turbulence-creating element to which the insert (306; 406; 409; 411; 512; 513; 514; 516; 517; 606; 618; 619; 620) is attachable is the turbulence-creating element in closest proximity to a centre point of the fluid flow field.

12. Fluid flow modification apparatus (100) according to claim 9, 10 or 11, wherein the insert (306; 406; 409; 411; 512; 513; 514; 516; 517; 606; 618; 619; 620) is attachable to the first surface portion of the turbulence-creating element, such that at least one end of the first surface portion remains exposed.

13. Fluid flow modification apparatus (100) according to any one of claims 1 to 8, wherein the insert (306; 406; 409; 411; 512; 513; 514; 516; 517; 606; 618; 619; 620) is adapted to be arranged in a gap between turbulence-creating elements.

14. Fluid flow modification apparatus (100) according to any of the preceding claims, wherein the structures include a structure which comprises a plurality of elongate members such that each member is in an end-to-end relationship with another elongate member, such that the structure is in the form of a polygon and wherein the insert (306; 406; 409; 411; 512; 513; 514; 516; 517; 606; 618; 619; 620) is attached to each of at least two elongate members in the structure, such that the arrangement of the inserts (306; 406; 409; 411; 512; 513; 514; 516; 517; 606; 618; 619; 620) on the at least two elongate members is symmetrical about a centre point of the structure.

15. Fluid flow modification apparatus (100) according to any of the preceding claims, wherein the turbulence-creating elements include at least two different types of element, including a first type of element and a second type of element, the first type of element being arranged at a first level of the fractual configuration and the second type of element being arranged at a second level of the fractual configuration, and wherein inserts (306; 406; 409; 411; 512; 513; 514; 516; 517; 606; 618; 619; 620) are attached to at least some of the turbulence-creating elements in the first level of the fractal configuration and to at least some of the turbulence-creating elements in the second level of the fractal configuration.

## Patentansprüche

1. Fluidstromänderungsvorrichtung (100) zum Erzeugen von Turbulenzen in einem Fluid während das Fluid sich relativ zu der Fluidstromänderungsvorrichtung (100) in einem Fluidströmungsfeld bewegt,
wobei die Vorrichtung umfasst:
eine Vielzahl von in einem fraktalen Aufbau angeordneter Turbulenzenerzeugender Elemente,
wobei jedes Turbulenzen-erzeugende Element einen ersten Oberflächenabschnitt aufweist, gegen den das Fluid strömen kann und einen zweiten Oberflächenabschnitt an dem das Fluid entlang strömen kann;
ein Einsatz (306; 406; 409; 411; 512; 514; 516; 517; 606; 618; 619; 620) zum Anordnen in der Vorrichtung (100), um die Strömung des Fluids zwischen angrenzenden zweiten Oberflächenabschnitten der wenigstens zwei Turbulenzen-erzeugenden Elemente aufzuhalten; und
eine Aufnahme zum Halten der Turbulenzen-erzeugenden Elemente in dem Fluid um eine Bewegung des Fluids relativ zu den Turbulenzen-erzeugenden Elementen und dem Einsatz (306; 406; 409; 411; 512; 514; 516; 517; 606; 618; 619; 620) zuzulassen.

2. Fluidstromänderungsvorrichtung (100) nach Anspruch 1,
wobei der Einsatz (306; 406; 409; 411; 512; 514; 516; 517; 606; 618; 619; 620) anbringbar an jedem der wenigstens zwei Turbulenzen-erzeugenden Elemente ist, so dass die Anordnung der Einsätze um einen Mittelpunkt des Fluidströmungsfeldes symmetrisch ist.

3. Fluidstromänderungsvorrichtung (100) nach einem der Ansprüche 1 oder 2, wobei der Einsatz (306; 406; 409; 411; 512; 514; 516; 517; 606; 618; 619; 620) aus einem im Wesentlichen unnachgiebigen Material gefertigt ist, so dass der Einsatz (306; 406; 409; 411; 512; 514; 516; 517; 606; 618; 619; 620) geeignet ist gegen den Fluidstrom im Wesentlichen stand zu halten.

4. Fluidstromänderungsvorrichtung (100) gemäß einem der Ansprüche 1, 2 oder 3, wobei der Einsatz (306; 406; 409; 411; 512; 514; 516; 517; 606; 618; 619; 620) aus Plastik oder Metall gefertigt ist.

5. Fluidstromänderungsvorrichtung (100) nach einem der vorstehenden Ansprüche,
wobei der Einsatz (306; 406; 409; 411; 512; 514; 516; 517; 606; 618; 619; 620) eine ein Fluid aufnehmende Oberfläche aufweist, gegen die das Fluid strömen kann und die ein Fluid aufnehmende Oberfläche eine unregelmäßige Form aufweist.

6. Fluidstromänderungsvorrichtung (100) nach einem der Ansprüche 1 bis 4,
wobei der Einsatz (306; 406; 409; 411; 512; 514; 516; 517; 606; 618; 619; 620) eine ein Fluid aufnehmende Oberfläche aufweist, gegen die das Fluid strömen kann und die ein Fluid aufnehmende Oberfläche in Form eines regelmäßigen Polygons ausgebildet ist.

7. Fluidstromänderungsvorrichtung (100) nach einem der vorstehenden Ansprüche,
wobei der Einsatz (306; 406; 409; 411; 512; 514; 516; 517; 606; 618; 619; 620) porös oder perforiert ist.

8. Fluidstromänderungsvorrichtung (100) nach einem der vorstehenden Ansprüche,
wobei der Einsatz (306; 406; 409; 411; 512; 514; 516; 517; 606; 618; 619; 620) inhomogen ist.

9. Fluidstromänderungsvorrichtung (100) nach einem der vorstehenden Ansprüche,
wobei der Einsatz (306; 406; 409; 411; 512; 514; 516; 517; 606; 618; 619; 620) an dem ersten Oberflächenabschnitt eines Turbulenzen-erzeugenden Elements anbringbar ist, so dass der Einsatz (306; 406; 409; 411; 512; 514; 516; 517; 606; 618; 619; 620) wenigstens teilweise den ersten Oberflächenabschnitt des Turbulenzen-erzeugenden Elements bedeckt.

10. Fluidstromänderungsvorrichtung (100) nach Anspruch 9,
wobei der Einsatz (306; 406; 409; 411; 512; 514; 516; 517; 606; 618; 619; 620) über eine Kante des ersten Oberflächenabschnittes des Turbulenzen-erzeugenden Elements hinaus hervorzustehend angeordnet ist.

11. Fluidstromänderungsvorrichtung (100) nach einem der Ansprüche 9 oder 10,
wobei das Turbulenzen-erzeugende Element, an welchem der Einsatz (306; 406; 409; 411; 512; 514; 516; 517; 606; 618; 619; 620) angebracht ist, das Turbulenzen-erzeugende Element in unmittelbarer Nähe zu einem Mittelpunkt des Fluidströmungsfeldes ist.

12. Fluidstromänderungsvorrichtung (100) nach einem der Ansprüche 9, 10 oder 11,
wobei der Einsatz (306; 406; 409; 411; 512; 514; 516; 517; 606; 618; 619; 620) an dem ersten Oberflächenabschnitt des Turbulenzen-erzeugenden Elements angebracht ist, so dass wenigstens ein Ende des ersten Oberflächenabschnitts freibleibt.

13. Fluidstromänderungsvorrichtung (100) nach einem der Ansprüche 1 bis 8,
wobei der Einsatz (306; 406; 409; 411; 512; 514; 516; 517; 606; 618; 619; 620) geeignet ist um in einer Lücke zwischen Turbulenzen-erzeugenden Elementen angeordnet zu werden.

14. Fluidstromänderungsvorrichtung (100) nach einem der vorstehenden Ansprüche,
wobei die Strukturen eine Struktur umfassen, welche eine Vielzahl an länglichen Elementen aufweist, so dass jedes Element in einer Ende-an-Ende Beziehung mit einem anderem länglichen Element steht, so dass die Struktur in Form eines Polygons ist und
wobei der Einsatz (306; 406; 409; 411; 512; 514; 516; 517; 606; 618; 619; 620) an jedem der wenigstens zwei länglichen Elemente in der Struktur angebracht ist, so dass die Anordnung der Einsätze (306; 406; 409; 411; 512; 514; 516; 517; 606; 618; 619; 620) an den wenigstens zwei länglichen Elementen symmetrisch um einen Mittelpunkt der Struktur ist.

15. Fluidstromänderungsvorrichtung (100) nach einem der vorstehenden Ansprüche,
wobei die Turbulenzen-erzeugenden Elemente wenigstens zwei unterschiedliche Elementtypen umfassen, die einen ersten Elementtyp und einen zweiten Elementtyp umfassen,
wobei der erste Elementtyp an einer ersten Ebene des fraktalen Aufbaus angeordnet ist und der zweite Elementtyp an einer zweiten Ebene des fraktalen Aufbaus angeordnet ist, und
wobei die Einsätze (306; 406; 409; 411; 512; 514; 516; 517; 606; 618; 619; 620) an wenigstens einigen der Turbulenzen-erzeugenden Elemente in der ersten Ebene des fraktalen Aufbaus und an wenigstens einigen der Turbulenzen-erzeugenden Elemente in der zweiten Ebene des fraktalen Aufbaus angebracht sind.

## Revendications

1. Appareil de modification de l'écoulement d'un fluide (100) destiné à créer des turbulences dans un fluide lorsque ledit fluide se déplace par rapport à l'appareil de modification de l'écoulement d'un fluide (100) dans un champ d'écoulement de fluide, l'appareil comprenant :
une pluralité d'éléments de création de turbulences agencés en une configuration fractale, chaque élément de création de turbulences présentant une première partie de surface contre laquelle le fluide peut s'écouler et une seconde partie de surface le long de laquelle le fluide peut s'écouler ;
un insert (306 ; 406 ; 409 ; 411 ; 512 ; 513 ; 514 ; 516 ; 517 ; 606 ; 618 ; 619 ; 620) destiné à un agencement dans l'appareil (100) de façon à obstruer l'écoulement du fluide entre lesdites secondes parties de surface adjacentes d'au moins deux éléments de création de turbulences; et
un support destiné à tenir les éléments de création de turbulences dans le fluide de façon à permettre un déplacement du fluide par rapport aux éléments de création de turbulences et audit insert (306 ; 406 ; 409 ; 411 ; 512 ; 513 ; 514 ; 516 ; 517 ; 606 ; 618 ; 619 ; 620).

2. Appareil de modification de l'écoulement d'un fluide (100) selon la revendication 1, dans lequel l'insert (306 ; 406 ; 409 ; 411 ; 512 ; 513 ; 514 ; 516 ; 517 ; 606 ; 618 ; 619 ; 620) peut être fixé à chacun d'au moins deux éléments de création de turbulences, de telle sorte que l'agencement des inserts soit symétrique autour d'un point central du champ d'écoulement de fluide.

3. Appareil de modification de l'écoulement d'un fluide (100) selon la revendication 1 ou 2, dans lequel l'insert (306 ; 406 ; 409 ; 411 ; 512 ; 513 ; 514 ; 516 ; 517 ; 606 ; 618 ; 619 ; 620) est réalisé dans un matériau sensiblement rigide, de telle sorte que l'insert (306 ; 406 ; 409 ; 411 ; 512 ; 513 ; 514 ; 516 ; 517 ; 606 ; 618 ; 619 ; 620) soit capable de résister sensiblement à l'écoulement du fluide contre lui.

4. Appareil de modification de l'écoulement d'un fluide (100) selon l'une quelconque des revendications 1, 2 ou 3, dans lequel l'insert (306 ; 406 ; 409 ; 411 ; 512 ; 513 ; 514 ; 516 ; 517 ; 606 ; 618 ; 619 ; 620) est réalisé dans une matière plastique ou en métal.

5. Appareil de modification de l'écoulement d'un fluide (100) selon l'une quelconque des revendications précédentes, dans lequel l'insert (306 ; 406 ; 409 ; 411 ; 512 ; 513 ; 514 ; 516 ; 517 ; 606 ; 618 ; 619 ; 620) présente une surface de réception de fluide contre laquelle le fluide peut s'écouler et la surface de réception de fluide présente une forme irrégulière.

6. Appareil de modification de l'écoulement d'un fluide (100) selon l'une quelconque des revendications 1 à 4, dans lequel l'insert (306 ; 406 ; 409 ; 411 ; 512 ; 513 ; 514 ; 516 ; 517 ; 606 ; 618 ; 619 ; 620) présente une surface de réception de fluide contre laquelle le fluide peut s'écouler et la surface de réception de fluide présente une forme de polygone régulier.

7. Appareil de modification de l'écoulement d'un fluide (100) selon l'une quelconque des revendications précédentes, dans lequel l'insert (306 ; 406 ; 409 ; 411 ; 512 ; 513 ; 514 ; 516 ; 517 ; 606 ; 618 ; 619 ; 620) est poreux ou perforé.

8. Appareil de modification de l'écoulement d'un fluide (100) selon l'une quelconque des revendications précédentes, dans lequel l'insert (306 ; 406 ; 409 ; 411 ; 512 ; 513 ; 514 ; 516 ; 517 ; 606 ; 618 ; 619 ; 620) n'est pas homogène.

9. Appareil de modification de l'écoulement d'un fluide (100) selon l'une quelconque des revendications précédentes, dans lequel l'insert (306 ; 406 ; 409 ; 411 ; 512 ; 513 ; 514 ; 516 ; 517 ; 606 ; 618 ; 619 ; 620) peut être fixé à la première partie de surface d'un élément de création de turbulences, de telle sorte que l'insert (306 ; 406 ; 409 ; 411 ; 512 ; 513 ; 514 ; 516 ; 517 ; 606 ; 618 ; 619 ; 620) recouvre au moins en partie la première partie de surface de l'élément de création de turbulences.

10. Appareil de modification de l'écoulement d'un fluide (100) selon la revendication 9, dans lequel l'insert (306 ; 406 ; 409 ; 411 ; 512 ; 513 ; 514 ; 516 ; 517 ; 606 ; 618 ; 619 ; 620) est agencé de façon à faire saillie au-delà d'un bord de la première partie de surface de l'élément de création de turbulences.

11. Appareil de modification de l'écoulement d'un fluide (100) selon la revendication 9 ou 10, dans lequel l'élément de création de turbulences auquel l'insert (306 ; 406 ; 409 ; 411 ; 512 ; 513 ; 514 ; 516 ; 517 ; 606 ; 618 ; 619 ; 620) peut être fixé, est l'élément de création de turbulences à proximité immédiate d'un point central du champ d'écoulement de fluide.

12. Appareil de modification de l'écoulement d'un fluide (100) selon l'une quelconque des revendications 9, 10 ou 11, dans lequel l'insert (306 ; 406 ; 409 ; 411 ; 512 ; 513 ; 514 ; 516 ; 517 ; 606 ; 618 ; 619 ; 620) peut être fixé à la première partie de surface de l'élément de création de turbulences, de telle sorte qu'au moins une extrémité de la première partie de surface demeure exposée.

13. Appareil de modification de l'écoulement d'un fluide (100) selon l'une quelconque des revendications 1 à 8, dans lequel l'insert (306 ; 406 ; 409 ; 411 ; 512 ; 513 ; 514 ; 516 ; 517 ; 606 ; 618 ; 619 ; 620) est adapté de façon à être disposé dans un intervalle entre les éléments de création de turbulences.

14. Appareil de modification de l'écoulement d'un fluide (100) selon l'une quelconque des revendications précédentes, dans lequel les structures comprennent une structure qui comprend une pluralité d'éléments allongés de telle sorte que chaque membre se trouve dans une relation bout à bout avec un autre élément allongé, de telle sorte que la structure se présente sous la forme d'un polygone et dans lequel l'insert (306 ; 406 ; 409 ; 411 ; 512 ; 513 ; 514 ; 516 ; 517 ; 606 ; 618 ; 619 ; 620) est fixé à chacun d'au moins deux éléments allongés dans la structure, de telle sorte que la disposition des inserts (306 ; 406 ; 409 ; 411 ; 512 ; 513 ; 514 ; 516 ; 517 ; 606 ; 618 ; 619 ; 620) sur les au moins deux éléments allongés soit symétrique autour d'un point central de la structure.

15. Appareil de modification de l'écoulement d'un fluide (100) selon l'une quelconque des revendications précédentes, dans lequel les éléments de création de turbulences comprennent au moins deux types d'éléments différents, comprenant un premier type d'élément et un second type d'élément, le premier type d'élément étant disposé à un premier niveau de la configuration fractale et le second type d'élément étant disposé à un second niveau de la configuration fractale, et dans lequel des inserts (306 ; 406 ; 409 ; 411 ; 512 ; 513 ; 514 ; 516 ; 517 ; 606 ; 618 ; 619 ; 620) sont fixés à certains au moins des éléments de création de turbulences dans le premier niveau de la configuration fractale et à certains au moins des éléments de création de turbulences dans le second niveau de la configuration fractale.
